# EUROPÄISCHE PATENTANMELDUNG

(11) **EP 1 691 213 A1**
(43) Veröffentlichungstag der Anmeldung: **16.08.2006**
(21) Anmeldenummer: 05112515.1
(22) Anmeldetag: 20.12.2005
(51) Int. Cl.: G01S 13/93, B60R 21/01

(54) **Verfahren und Vorrichtung zur Objekterkennung**

(30) Priorität: 15.02.2005 DE 102005006763
(71) Anmelder: ROBERT BOSCH GMBH, 70442 Stuttgart (DE)
(72) Erfinder: Mack, Frank, 70376 Stuttgart (DE)

(57) **Zusammenfassung**

Das Verfahren sieht vor eine Relativgeschwindigkeit eines ersten Objekts vor dem Aufprall auf ein bewegtes zweites Objekt, z.B. dem Fahrzeug, mit einer ersten berührungslosen Sensoreinrichtung 10 und eine Krafteinwirkung des ersten Objekts auf das zweite Objekt beim Aufprall mit einer zweiten Sensoreinrichtung 20 zu erfassen. Basierend auf der Krafteinwirkung und der Relativgeschwindigkeit wird eine Masse-kennzeichnende und/oder Härte-kennzeichnende Größe des ersten Objekts geschätzt und das erste Objekt als bestimmter Objekttyp erkannt, wenn die geschätzte Masse-kennzeichnende und/oder Härte-kennzeichnende Größe innerhalb eines vorgegebenen Bereichs liegt.

## Beschreibung

### STAND DER TECHNIK

Die vorliegende Erfmdung betrifft ein Verfahren zur Objekterkennung und eine Vorrichtung zur Durchführung des erfindungsgemäßen Verfahrens.

Obwohl die vorliegende Erfmdung anhand einer Problematik zur Erkennung eines Fußgängers beschrieben wird, ist sie nicht darauf beschränkt, sondern betrifft allgemein Verfahren zur Erkennung eines beliebigen Objekts.

Nach einer Richtlinie der Europäischen Union sollen in Zukunft Fahrzeuge, insbesondere Pkws, so konstruiert werden, dass die Verletzungen des Fußgängers innerhalb geforderter Grenzen bleiben. Deshalb wird versucht, durch Änderungen im Design der Stoßstange sowie der Fahrzeugkarosserie eine Knautschzone für den Fußgänger zu schaffen, um die auftretenden Kräfte bei dem Zusammenprall zu mindern. Die Schwere einiger Verletzungen, insbesondere im Kopfbereich, lassen sich jedoch durch diese passive Knautschzone nicht immer ausreichend verringern. Typische Kopfverletzungen treten beim Aufprall des Kopfes auf der Motorhaube und dem unmittelbar unter der Motorhaube befindlichen Motorblock auf, sowie an der A-Säule und der Dachkante. Verletzungen des Kopfes an diesen Fahrzeugbereichen sollen deshalb zusätzlich durch aktive Personenschutz-Einrichtungen, wie z.B. Außenairbags, oder durch ein Anheben der Motorhaube abgemildert werden.

Diese aktiven Puffereinrichtungen sollen bei einem Zusammenprall mit einem Fußgänger automatisch ausgelöst werden. Jedoch soll vermieden werden, dass sie aufgrund anderer Ereignisse aktiviert werden, um einerseits Irritationen des Fahrers wie auch unnötige Kosten durch Auslösen der zum Teil irreversiblen Personenschutz-Einrichtungen zu vermeiden. Daher ist eine zuverlässige Erkennung eines Objekts als Fußgänger unerlässlich.

Ein dem Erfinder bekanntes Verfahren erfasst die Krafteinwirkung beim Aufprall eines Objekts auf das Fahrzeug mittels Beschleunigungssensoren. Die Erfassung der Krafteinwirkung durch die Beschleunigungssensoren beginnt, wenn die erfasste Beschleunigung einen Schwellwert von typischerweise dem Zehnfachen der Erdbeschleunigung überschreitet, da solche Werte nur bei einem Zusammenstoß und nicht im alltäglichen Straßenverkehr, wie z.B. durch Bremsen, Beschleunigen oder bei einer Schlaglochdurchfahrt auftreten. Durch eine Integration der erfassten Beschleunigung oder Krafteinwirkung und unter Kenntnis der statischen und dynamischen Eigenschaften der Fahrzeugkarosserie bei einem Aufprall wird der Impuls des Objekts bestimmt und daraus unter der Annahme einer geringen Eigengeschwindigkeit des Objekts die effektive Masse dieses Objekts geschätzt. Liegt diese effektive Masse innerhalb eines typischen Bereichs eines Menschen, so wird dieses Objekt als Mensch erkannt. Jedoch kann bei diesem Verfahren z.B. ein schnell fliegender Fußball irrtümlicher Weise als Mensch erkannt werden.

Ein weiteres bekanntes Verfahren bestimmt die Härte eines Objekts, indem oszillatorische Anteile der erfassten Krafteinwirkung ausgewertet werden. Die Frequenz der Oszillationen steigt mit zunehmender Härte des Objekts. Mit vorbestimmten typischen Werten für Menschen, können die Menschen somit über die Härte und die erfassten Frequenzen identifiziert werden. Die Härte und Steifigkeit von Objekten, unter anderem des Menschen und der Fahrzeuge, ist dynamisch von der Geschwindigkeiten der Objekte abhängig, daher wird zusätzlich von einem Geschwindigkeitsmesser des Fahrzeuges bestimmte Fahrzeuggeschwindigkeit unter der Annahme einer geringen Eigengeschwindigkeit des Objekts für die Auswertung berücksichtigt. Schnelle Objekte führen wie bei der Bestimmung der effektiven Masse jedoch zu Beeinträchtigungen in der Erkennung der Objekte.

### VORTEILE DER ERFINDUNG

Das erfmdungsgemäße Verfahren mit den Merkmalen des Patentanspruchs 1 und die Vorrichtung mit den Merkmalen des Patentanspruchs 12 ermöglichen eine eindeutige Erkennung des Objekts.

Eine dem Verfahren zugrunde liegende Idee besteht darin, eine Relativgeschwindigkeit eines ersten Objekts auf Kollisionskurses, also vor dem Aufprall, auf ein bewegtes zweites Objekt, z.B. dem Fahrzeug, mit einer ersten berührungslosen Sensoreinrichtung und eine Krafteinwirkung des ersten Objekts auf das zweite Objekt mit einer zweiten Sensoreinrichtung zu erfassen. Basierend auf der Krafteinwirkung bei der Kollision und der Relativgeschwindigkeit wird eine Masse-kennzeichnende Größe und/oder die Härte-kennzeichnende Größe des ersten Objekts geschätzt und das erste Objekt als bestimmter Objekttyp erkannt, wenn die geschätzte Masse-kennzeichnende und/oder die Härte-kennzeichnende Größe innerhalb vorgegebener Bereiche liegen. Die Masse-kennzeichnende Größe und die Härte-kennzeichnende Größe bezeichne Größen wie die effektive Masse bzw. Härte oder andere Größen, deren einzig freier Parameter die effektive Masse bzw. Härte des Objekts ist, so dass diese kennzeichnenden Größen für eine Charakterisierung des ersten Objekt geeignet sind.

Im Prinzip kann durch die zweite Sensoreinrichtung die Änderung eines Anteils des Impulses des Fahrzeuges z.B. durch Integration der Krafteinwirkung erfasst werden und aus der Impulsänderung durch Division durch die Relativgeschwindigkeit eine der effektiven Masse entsprechende Größe des ersten Objekts bestimmt werden, ohne unsichere Annahmen über das erste Objekt vorraussetzen zu müssen. Die Bestimmung der Härte-kennzeichnenden Größe kann z.B. mittels durch Versuchsreihen vorbestimmter Wertetabellen von Oszillationsfrequenzen der Krafteinwirkung in Abhängigkeit der Relativgeschwindigkeit erfolgen.

Eine häufig gestellte Anforderung an sicherheitsrelevante Systeme ist, dass zwei unabhängige Sensoren ein Ereignis bestätigen müssen, z.B. um Fehlverhalten des Systems zu erkennen. Das erfindungsgemäße Verfahren erfüllt diese Spezifikation hinsichtlich dem Eintreten einer Kollision mit der ersten und der zweiten Sensoreinrichtung, ohne dass zusätzliche redundante Sensoren verwendet werden müssen.

In den Unteransprüchen fmden sich vorteilhafte Weiterbildungen und Verbesserungen des erfmdungsgemäßen Verfahrens.

Gemäß einer besonders bevorzugten Weiterbildung wird ein Kollisionszeitpunkt des ersten Objekts mit dem bewegten zweiten Objekt durch die erste Sensoreinrichtung des zweiten Objekts geschätzt, bevor die Kollision eintritt und die Erfassung der Krafteinwirkung erfolgt spätestens ab dem geschätzten Kollisionszeitpunkt.

Ein Vorteil dieses Verfahrens liegt darin, dass die Krafteinwirkung ab dem Kollisionszeitpunkt bestimmt wird und nicht erst ab einem späteren Zeitpunkt, welcher durch Überschreiten eines Schwellwertes durch die Krafteinwirkung festgelegt wird. Daher ist eine genauere Schätzung der effektiven Masse und damit eine sicherere Erkennung des ersten Objekts möglich.

Gemäß einer Weiterbildung des erfindungsgemäßen Verfahrens wird in einem ersten Schritt eine Trajektorie des ersten Objekts mit der ersten Sensoreinrichtung bestimmt und basierend auf der Trajektorie abgeschätzt, ob eine Kollision mit dem ersten Objekt eintritt. Damit werden nur erste Objekte dem ersten Objekttyp zugeordnet, wenn eine Kollision stattfmdet. Somit wird ein Fußgänger von der Sensoreinrichtung als uninteressant eingestuft, wenn kein Unfall zu erwarten ist.

Gemäß weiteren Weiterbildungen wird der Kollisionszeitpunkt und/oder der Kontaktpunkt des ersten Objekts mit dem zweiten Objekt basierend auf der Trajektorie geschätzt. Gemäß einer weiteren Weiterbildung wird eine Abweichung des geschätzten Kollisionszeitpunkts zu einem tatsächlichen Kollisionszeitpunkt und/oder eine Abweichung des geschätzten Kollisionszeitpunktes zu einem tatsächlichen Kollisionszeitpunkt erfasst und basierend auf mindestens einer der beiden Abweichungen die erfasste Relativgeschwindigkeit korrigiert. Der Kontaktpunkt ist die Stelle des zweiten Objekts, welche mit dem ersten Objekt bei der Kollision in Berührung kommt.

Da kurz vor einem Zusammenstoß eines Fahrzeuges mit einem Fußgänger plötzliche Richtungsänderungen und/oder Geschwindigkeitsänderungen aufgrund von Brems- oder Lenkmanövern zu erwarten sind, kann die erfasste Relativgeschwindigkeit von der realen Relativgeschwindigkeit abweichen. Die Abweichungen des Kollisionszeitpunktes und/oder des Kontaktpunktes ermöglichen es, mit einfachen geometrischen Beziehungen die Abweichung der erfassten Relativgeschwindigkeit von der realen Relativgeschwindigkeit zu bestimmen und die entsprechenden Korrekturen vorzunehmen.

Gemäß einer weiteren Weiterbildung wird in einem Schritt eine Gestalt des ersten Objekts mittels einer dritten Sensoreinrichtung vor der Kollision erfasst und in einem weiteren Schritt eine Übereinstimmung der erfassten Gestalt mit einer vorgegebenen Gestalt des ersten Objekttyps geschätzt und bei Übereinstimmung das erste Objekt als bestimmter Objekttyp erkannt. Die dritte Sensoreinrichtung kann auch der ersten Sensoreinrichtung entsprechen, um die notwendige Anzahl an Sensoreinrichtungen gering zu halten.

Gemäß einer weiteren Weiterbildung wird in einem Schritt eine Geschwindigkeit des ersten Objekts bestimmt, und nur wenn die Geschwindigkeit des ersten Objekts innerhalb eines vorgegebenen Bereichs liegt, wird das erste Objekt als bestimmter Objekttyp erkannt. So wird ein Objekt mit Mensch-untypischer Geschwindigkeit nicht als Mensch erkannt.

Gemäß einer weiteren Weiterbildung wird bei einem Widerspruch der Erkennung des ersten Objekts als bestimmter Objekttyp von zwei verschiedenen Schritten das erste Objekt als bestimmter Objekttyp erkannt. Da ein Nicht-Erkennen eines Aufpralls eines Fußgängers schwerer wiegt als ein Erkennen eines anderen Objekts fälschlicherweise als ein Mensch, wird im Zweifel das erste Objekt immer als Mensch erkannt.

Gemäß einer Weiterbildung wird bei einem Widerspruch der Erkennung des Objekts als ersten Objekttyps basierend auf der Masse-behafteten und der Härte-behafteten Größe, das Objekt nicht als bestimmter Objekttyp erkannt.

Gemäß einer Weiterbildung wird in einem ersten Schritt eine Trajektorie des ersten Objekts mit der ersten Sensoreinrichtung bestimmt und basierend auf der Trajektorie geschätzt, mit welcher Wahrscheinlichkeit eine Kollision des zweiten mit dem ersten Objekt eintreten wird.

Gemäß einer weiteren Weiterbildung weist eine Vorrichtung eine erste Sensoreinrichtung des zweiten Objekts mit mindestens einem berührungslosen Sensor zum Erfassen eines ersten Objekts; eine zweite Sensoreinrichtung mit mindestens einem Sensor zum Erfassen und Umwandeln der Krafteinwirkung des ersten Objekts auf das zweite Objekt in ein Signal, wobei die Datenverarbeitungseinrichtung mit der ersten Sensoreinrichtung verbunden ist, um ein Startsignal zu empfangen; und eine Datenverarbeitungsvorrichtung, welche mit der zweiten Sensoreinrichtung zum Übermitteln des Signals verbunden ist und welche zum Schätzen der Masse-kennzeichnenden Größe des ersten Objekts zum Erkennen des ersten Objekts eingerichtet ist, auf.

Gemäß einer weiteren Weiterbildung weist die erste Sensoreinrichtung einen Sensor zum Erfassen der Relativgeschwindigkeit des ersten Objekts zu dem zweiten Objekt auf und ist mit der Datenverarbeitungseinrichtung verbunden, wobei die Datenverarbeitungseinrichtung derart eingerichtet ist, dass die Masse-kennzeichnende Größe basierend auf der erfassten Relativgeschwindigkeit geschätzt wird.

Ausführungsbeispiele der Erfindung sowie vorteilhafte Weiterbildungen sind in den Figuren der Zeichnungen schematisch dargestellt und in der nachfolgenden Beschreibung näher erläutert.

### ZEICHNUNGEN

In den Figuren zeigen:
- Fig. 1: ein Blockschaltbild zur Darstellung einer Ausführungsform der vorliegenden Erfindung;
- Fig. 2: eine Detaildarstellung einer ersten Sensoreinrichtung der ersten Ausfühnmgsform;
- Fig. 3: eine Detaildarstellung einer zweiten Sensoreinrichtung der ersten Ausführungsform;
- Fig. 4: eine graphische Darstellung zur Erläuterung der Erfassung einer Krafteinwirkung; und
- Fig. 5: ein Flussdiagramm zur Darstellung einer Ausführungsform der vorliegenden ErFmdung.

### BESCHREIBUNG DER AUSFÜHRUNGSBEISPIELE

In den Figuren geben gleiche Bezugszeichen gleiche oder funktionsgleiche Bestandteile der Vorrichtung an.

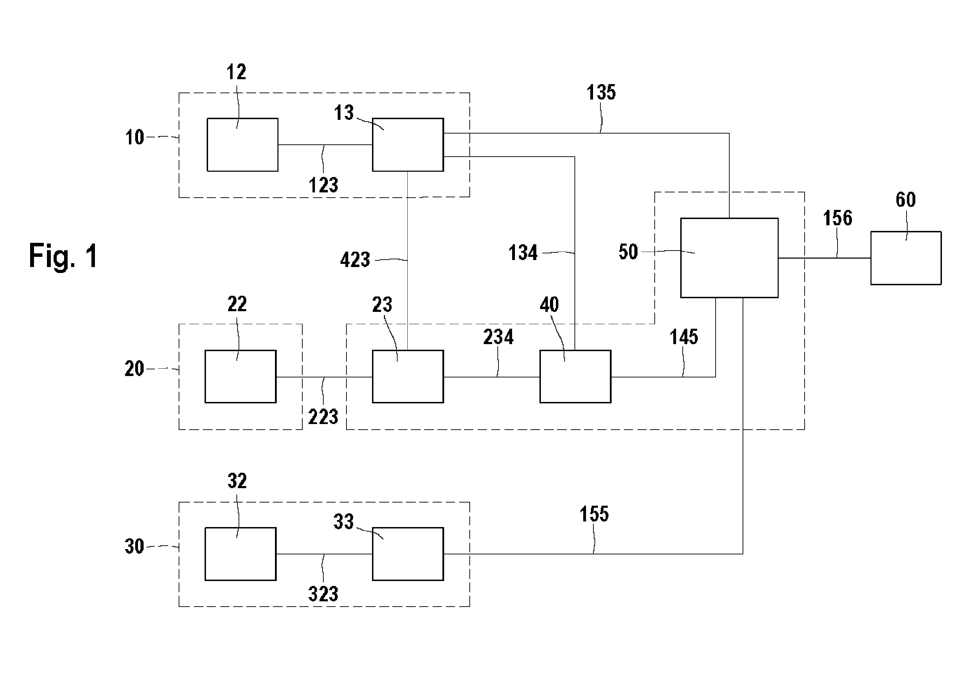

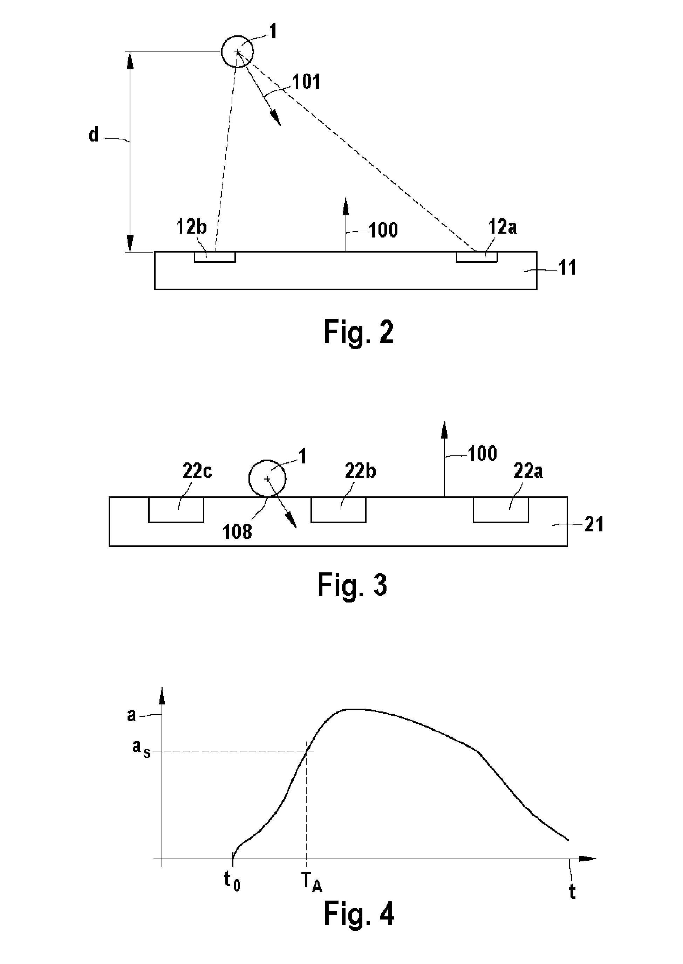

In Fig. 1 ist schematisch eine Ausführungsform einer Vorrichtung zur Erkennung eines Objekts dargestellt. Diese Vorrichtung wird nachfolgend mit Bezug auf die Fig. 2 und 3, welche Detaildarstellungen der ersten 10 und zweiten Sensoreinrichtung 20 darstellen, sowie der Fig. 4, anhand welcher die Funktionsweise der Auswertungseinrichtung 23 erläutert wird, beschrieben.

Die gesamte Vorrichtung ist an einem Fahrzeug oder einem anderen zweiten Objekt angeordnet. Dieses Fahrzeug bewegt sich in Richtung 100. Ein Fußgänger oder ein beliebiges anderes erstes Objekt 1 bewegt sich relativ zu dem Fahrzeug in Richtung 101. Die Eigenbewegung oder Absolutgeschwindigkeit des Fußgängers 1 ist in der Regel geringer als die des Fahrzeuges.

Die Figuren 1 und 2 zeigen die erste Sensoreinrichtung 10, welche einen oder mehrere Sensoren 12, 12a, 12b aufweist, welche den Fußgänger 1 berührungslos erfassen. Die ersten Sensoren 12, 12a, 12b sind in der Lage den Fußgänger 1 im Abstand von mehreren Metern bis hundert Meter, also ohne Kontakt mit dem Fahrzeug oder einer Sensoreinrichtung des Fahrzeuges, zu erfassen. Im Nachfolgenden werden die ersten Sensoren 12, 12a, 12b als vorausschauende Sensoren bezeichnet. Die vorausschauende Sensoren 12, 12a, 12b können Ultraschallsensoren, Radarsensoren, LIDAR-Sensoren oder räumlich auflösende Bilderfassungssysteme, wie z.B. Kameras, sein.

Mittels bekannter Techniken, wie z.B. einer stereographischen Projektion oder von Laufzeitdifferenzen der Signale von zwei oder mehreren vorausschauenden Sensoren 12a, 12b, wie in Fig. 2 dargestellt, kann die Entfernung d des Fußgängers 1 zu dem Fahrzeug bestimmt werden. Dazu werden die Signale 123 der vorausschauenden Sensoren 12 an eine bereitgestellte Auswertungseinrichtung 13 der ersten Sensoreinrichtung 10 weitergeleitet, welche die entsprechenden Berechnungen für die relative Positionsbestimmung des Fußgängers 1 zu dem Fahrzeug vornimmt. Die Auswertungseinrichtung 13 kann eine Speichereinrichtung zum Speichern von Positionen des Fußgängers 1 und eine Prozessoreinrichtung aufweisen, um aus den gespeicherten Positionen eine Trajektorie des Fußgängers 1 bezüglich des Fahrzeugs zu bestimmen. Zudem wertet die Auswertungseinrichtung 13 diese Trajektorie dahingehend aus, ob eine Kollision des Fußgängers 1 mit dem Fahrzeug zu erwarten ist oder nicht. Bei einer erwarteten Kollision wird der Kollisionszeitpunkt T₀ des Fußgängers 1 mit dem Fahrzeug aus der Trajektorie bestimmt und vorzugsweise auch der Kontaktpunkt 108 an dem Fahrzeug, an welchem das Fahrzeug mit dem Fußgänger 1 wahrscheinlich zusammenstößt.

Eine zweite Sensoreinrichtung 20 weist einen oder mehrere Sensoren 22, 22a, 22b, 22c auf (siehe Figuren 1 und 3), welche eine Krafteinwirkung auf die Sensoreinrichtung 20 erfassen können. Diese im Folgenden als Kontaktsensoren bezeichneten Sensoren 22, 22a, 22b, 22c sind in einer bevorzugten Ausführungsform Beschleunigungssensoren, aber auch andere Kontaktsensoren, wie Klopfsensoren, piezoelektrische Kabel, welche bei Verformung einen Spannungspuls abgeben, Lichtwellenleiter, deren optische Eigenschaften sich bei mechanischem Stress ändern, können verwendet werden. Typische Beschleunigungssensoren weisen an einer Feder oder einem Ausleger eine kleine Masse auf, welche bei einer Krafteinwirkung aus der Ruhelage ausgelenkt wird und dessen Auslenkung als Maß für die Krafteinwirkung kapazitativ oder induktiv erfasst wird.

In Fig. 4 ist exemplarisch ein Verlauf einer erfassten Beschleunigung a bei einem Aufprall eines Fußgängers zu einem Kollisionszeitpunkt tₒ über die Zeit graphisch dargestellt. Durch eine Integration der Beschleunigung über die Zeit und die Kenntnis der Fahrzeugmasse, sowie der mechanischen Eigenschaften der Karosserie kann der Impuls bestimmt werden, welcher auf das Fahrzeug übertragen wurde. Entsprechend weist eine Auswertungseinrichtung 23 eine Integrationseinrichtung für die Signale 223 von den Beschleunigungssensoren 22 auf, wobei die Integration festverdrahtet oder durch einen Algorithmus erfolgt.

Die Integration wird durch ein Steuersignal 423 gestartet, welches von der Auswertungseinrichtung 13 der vorausschauenden Sensoren 10 übermittelt wird, wenn der erwartete Kollisionszeitpunkt Tₒ eingetreten ist. Eine Alternative besteht darin, den erwarteten Kollisionszeitpunkt Tₒ als Signal 423 an die Auswertungseinrichtung 23 zu übermitteln, so dass ein Zeitgeber des Integrators die Akkumulation der Beschleunigungswerte durch den Integrator startet. Da der erwartete Kollisionszeitpunkt Tₒ nahe dem tatsächlichen Kollisionszeitpunkt tₒ liegt, erfasst der Integrator nahezu alle für den Aufprall relevanten Beschleunigungswerte und nicht erst nach dem einmalig ein Schwellwert aₛ überschritten wurde, also ab einem in der Regel späteren Zeitpunkt T_{A}, wie in Fig. 4 dargestellt. Auf diese Weise wird eine genauere Erfassung des Integrationswertes und somit des Impulsübertrags möglich.

Aus dem Impulsübertrag kann die effektive Masse grob abgeschätzt werden, wenn man annimmt, dass die Geschwindigkeit des Objekts gegenüber der Geschwindigkeit des Fahrzeugs 100 einen nahezu vernachlässigbaren Betrag aufweist. Allerdings ist diese Annahme nur bedingt zutreffend, insbesondere im Stadtverkehr, oder bei Objekten mit erheblicher Eigengeschwindigkeit wie bei einem schnell fliegendem Fußball.

Deshalb wird der ermittelte Integrationswert als Signal 234 an eine erste Datenverarbeitungseinrichtung 40 übermittelt. Diese empfängt zusätzlich ein Signal 134 zur Übermittelung der erfassten Relativgeschwindigkeit 101 des Fahrzeuges zu dem Fußgänger 1, welche in der dargestellten Ausführungsform durch die vorausschauende Sensoreinrichtung 10 aus der relativen Trajektorie des Fußgängers bestimmt wird. Eine weitere Ausführungsform der vorliegenden Erfindung sieht vor, eine Sensoreinrichtung, welche basierend auf dem Dopplereffekt die Geschwindigkeit des Fußgängers bestimmt, zu verwenden. Aus dem Integrationswert und der Relativgeschwindigkeit 101 bestimmt die erste Datenverarbeitungseinrichtung 40 die effektive Masse mit hoher Genauigkeit. Eine grundlegende Operation ist den Impulsübertrag in Relation zu der Relativgeschwindigkeit 101 und der Masse des Fahrzeuges zu setzen. Es muss jedoch auch berücksichtigt werden, dass beim Aufprall zum Teil plastische Verformungsarbeit an der Fahrzeugskarosserie verrichtet wird, welche die Beschleunigungssensoren oder Kraftsensoren unter Umständen z.B auf Grund ihrer Anordnung nicht erfassen. Um diese Eigenschaften zu berücksichtigen ist es vorteilhaft Stützwerte durch Simulationen und/oder Versuche mit Menschenpuppen oder Beinattrappen durchzuführen und die für ein Fahrzeug typischen ermittelten Parameter in einer Speichervorrichtung der Datenverarbeitungsvorrichtung 40 vorzuhalten.

Für eine genaue Bestimmung der effektiven Masse ist es neben der Erfassung der Relativgeschwindigkeit 101 und der Beschleunigungswerte a auch notwendig, den Aufprallwinkel, also den Winkel zwischen den Geschwindigkeiten 101, 100 des Fußgängers 1 und des Fahrzeuges zu bestimmen. Hierbei ist für die Bestimmung des Impulsübertrags im Wesentlichen nur der zu der Geschwindigkeit 100 des Fahrzeuges parallele Anteil der Geschwindigkeit des Fußgängers 1 zu berücksichtigen.

Es ist vorteilhaft den Kontaktpunkt 108 des Fußgängers 1 mit dem Fahrzeug zu erfassen, um den Anteil des Impulses bestimmen zu können, welcher aufgrund der mechanischen Eigenschaften, wie Dämpfung, Elastizität, Steifigkeit, usw. an einen Beschleunigungssensor 22 übertragen wird. Hierbei kann einerseits der geschätzte Kontaktpunkt 108 durch die erfasste Trajektorie herangezogen werden, als auch der Kontaktpunkt 108 durch zwei oder mehr Kontaktsensoren 22a, 22b, 22c bestimmt werden. Es erweist sich hierbei als vorteilhaft, einen Mittelwert des auf diese beiden Weisen erfassten Kontaktpunkts 108 zu bestimmen. Die räumliche Auflösung mittels der Trajektorie und der vorausschauenden Sensoren 12a, 12b ist hoch, jedoch kann der Fußgänger plötzlich kurz vor dem Aufprall die Richtung ändern, so dass die vorausschauenden Sensoren diese Änderung auf Grund eines Zeitrasters der Sensoren nicht mehr erfassen können. Die Kontaktsensoren 22a, 22b, 22c erfassen zwar prinzipiell die Position des Fußgängers 1 beim Kontakt, jedoch weisen sie eine geringere Ortsauflösung auf.

Eine erhebliche Abweichung des auf diese beiden Weisen bestimmten Kontaktpunkts 108 lässt im Umkehrschluss auf eine plötzliche Richtungsänderung des Fußgängers kurz vor dem Aufprall schließen. Durch zusätzliche Erfassung bzw. Schätzung des Kollisionszeitpunktes durch die beiden Sensoreinrichtungen kann die zuvor bestimmte Relativgeschwindigkeit korrigiert werden, um somit einen genaueren Wert für die Bestimmung der effektiven Masse des Fußgängers zu erhalten.

Die bestimmte effektive Masse 145 wird an eine zweite Datenverarbeitungseinrichtung 50 übermittelt, welche entscheidet, ob die effektive Masse einer typischen Masse eines Fußgängers entspricht oder diese wesentlich unterschreitet oder überschreitet, also z.B. ein Ball oder ein Baum ist. Wird ein Fußgänger als solcher erkannt, kann ein Signal 156 an eine Steuerungseinrichtung 60 geleitet werden, um entsprechende Personenschutzeinrichtungen, z.B. Airbags an der A-Säule, oder ein Anheben der Motorhaube auszulösen. Für die Erkennung des Menschen ist nicht dessen reale Masse notwendig, sondern eine Größe, welche eindeutig mit dessen Masse verknüpft ist. Dies kann unter anderem die Masse der Beine, also nur ein Teil der Gesamtmasse sein, aber auch andere kennzeichnende Größen, welche in eindeutiger Weise von der Masse und anderen konstanten Parametern abhängen, z.B. kann die Masse der Karosserie ein solch ein konstanter Parameter sein und die kennzeichnende Größe das Produkt der beiden Massen. Eine aufwendige Umrechnung der Sensorwerte in die Masse des Objekts kann vermieden werden, indem Vergleichswerte zur Erkennung entsprechend der kennzeichnenden Größe ermittelt werden.

Die zweite Datenverarbeitungseinrichtung 50 kann zudem mit einer dritten Sensoreinrichtung 30 verbunden sein, welche basierend auf einem räumlich auflösenden Sensor 32, z.B. einer Videokamera, und einer entsprechenden Auswertungseinrichtung 33 die Gestalt des Fußgängers als solche identifizieren kann. Ist das entgegenkommende Hindernis kein Fußgänger, wird also durch die Sensoreinrichtung 30 nicht als Fußgänger erkannt, kann ein unnötiges Auslösen der Personenschutzeinrichtung unterbunden werden. Die vorrausschauende Sensoreinrichtung 10 kann auch räumlich erfassende Sensoren aufweisen, so dass ein zusätzliche Sensoreinrichtung 30 nicht notwendig ist.

In ähnlicher Weise kann durch eine Bestimmung der Absolutgeschwindigkeit des entgegenkommenden Hindernisses aus der Relativgeschwindigkeit, z.B. durch die vorausschauende Sensoreinrichtung 10, und der Fahrzeuggeschwindigkeit 100, z.B. durch einen Geschwindigkeitsmesser des Fahrzeuges, und anhand typischer Geschwindigkeiten von Fußgängern zur Erkennung des Fußgängers herangezogen werden. So wird ein Objekt mit Mensch-untypischer Geschwindigkeit nicht als Mensch erkannt. Sinnvollerweise wird die zweite Datenverarbeitungseinrichtung 50 so eingerichtet, dass bei einem Widerspruch der Sensoreinrichtungen das entgegenkommende Objekt im Zweifelsfall als Fußgänger identifiziert wird.

In der vorgehenden Beschreibung wurden die Integrationseinrichtung in der Auswertungseinrichtung (23), die erste (40) und zweite Datenverarbeitungseinrichtung (50) als getrennte Elemente beschrieben. Eine Ausführungsform sieht jedoch vor ein einziges Datenverarbeitungssystem bereitzustellen und die Signale mittels eines entsprechenden Algorithmus zu verarbeiten.

Wird ein erstes Objekt 1 als Mensch erkannt, wird ein Steuerungssignal 156 von der zweiten Datenverarbeitungseinrichtung an eine Personenschutzeinrichtung 60 ausgegeben, welche daraufhin ausgelöst wird.

Eine weitere Ausführungsform der vorliegenden Erfindung sieht vor die Härte des Objekts zu bestimmen, da diese ebenfalls charakteristisch für einen Menschen bzw. dessen Beine ist. Die erfasste Beschleunigung bei der Kollision weist eine überlagerte Oszillation auf. Deren Frequenz steigt mit zunehmender Härte des Objekts. Durch einen Fenstervergleich mit vorbestimmten Tabellen, lässt sich erkennen, ob das Objekt ein Mensch ist. Die Härte von Objekten ist keine statische Größe, sondern ist abhängig von der Geschwindigkeit der Deformation. Daher werden die Tabellen in Abhängigkeit der Relativgeschwindigkeit bestimmt, um verlässliche Aussagen treffen zu können. Wie bereits beschrieben, kann vereinfachend die Relativgeschwindigkeit gleich der Fahrzeuggeschwindigkeit gesetzt werden. Mit der Bestimmung der Relativgeschwindigkeit mittels der vorrausschauenden Sensoren wird die Genauigkeit des Verfahrens jedoch erhöht und somit eine verlässlichere Erkennung ermöglicht. Werden sowohl die Härte als auch die Masse zur Identifikation herangezogen, so ist davon auszugehen, dass beide das Objekt als Mensch bzw. nicht als Mensch identifizieren.

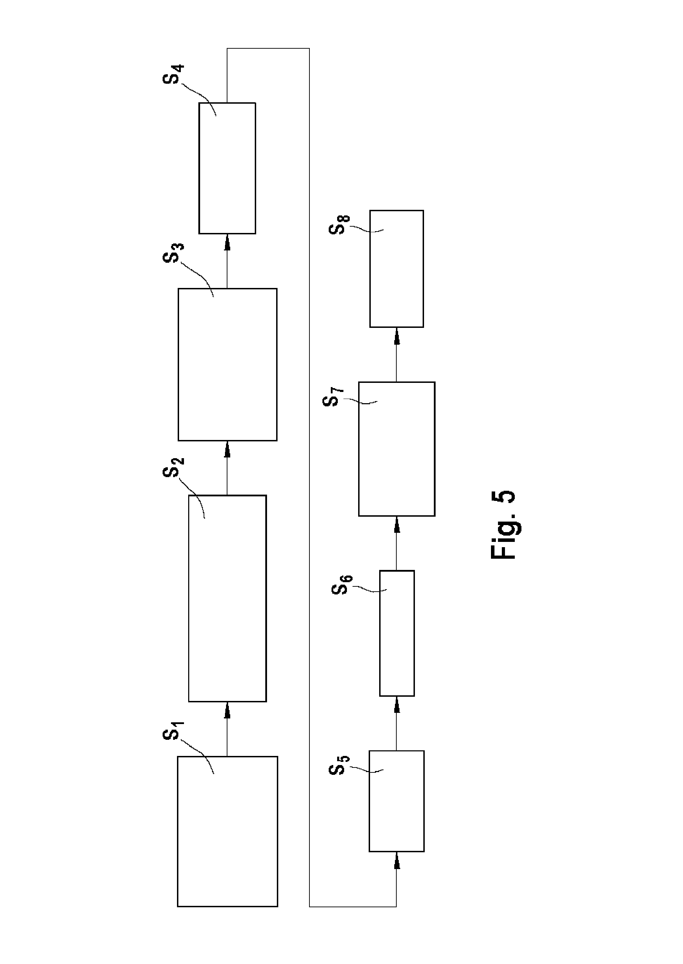

In Figur 5 ist als Flussdiagramm eine Ausführungsform dargestellt. In einem ersten Schritt S₁ erfasst ein Ultraschallsensor (10), dass eine Kollision bevorsteht und wann sie eintreten wird. Nachfolgend wird die Integration von Signalen der Beschleunigungssensoren gestartet S₂, vorzugsweise zeitnah oder bevor die Beschleunigungssensoren die Kollision erfassen S₃. Eine Erfassung des tatsächlichen Zeitpunkts tₒ der Kollision S₄ und eine Bestimmung einer Abweichung zu dem vorrausgesagten Zeitpunkt in Schritt S₁, werden in dem Schritt S₆ verwendet, um die Relativgeschwindigkeit dv basierend auf der Trajektorie, welche in Schritt S₁ ermittelt wurde zu schätzen S₆. Basierend auf der Relativgeschwindigkeit und den Beschleunigungssignalen wird die Masse bestimmt und in einem nachfolgenden Schritt S₇ das Objekt hinsichtlich der Masse als Mensch oder anderes Objekt klassifiziert und entsprechend eine Auslösesignal an das Personenschutzsystem ausgegeben S₈.

In einer Ausführungsform sieht das Verfahren vor die Wahrscheinlichkeit zu bestimmen, mit welcher eine Kollision zu erwarten ist. Die Wahrscheinlichkeit steigt unter anderem, mit abnehmender Distanz d der Objekte zueinander, da die Möglichkeit auszuweichen abnimmt. Weiters erhöhen eine hohe Relativgeschwindigkeit 101, schlechte Witterungsbedingungen und ein Aufprallpunkt nahe der Fahrzeugmitte die Kollisions-Wahrscheinlichkeit.

Obwohl die vorliegende Erfindung anhand bevorzugter Ausführungsbeispiele beschrieben wurde, ist sie nicht darauf beschränkt.

Insbesondere gibt eine Vielzahl weiterer Sensoren, welche ein Objekt erkennen können oder die Wahrscheinlichkeit einer sicheren Erkennung erhöhen. So kann zum Beispiel der Reflektionsanteil von Radarstrahlen zur Erkennung des Objekts als vorwiegend metallisch oder wasserhaltig, also Fahrzeug bzw. Mensch herangezogen werden.

Außerdem ist die Klasse des ersten Objekts oder der Objekttyp nicht auf einen Fußgänger beschränkt, sondern kann auch andere Verkehrsteilnehmer beinhalten. Da ein Aufprall nur dann zu Verletzungen fuhrt, wenn die Relativgeschwindigkeit groß ist, kann der Objekttyp z.B auf Verkehrsteilnehmer mit hoher Relativgeschwindigkeit eingeschränkt werden. Hierzu ist entsprechend zur Auswertung die Relativgeschwindigkeit an die zweite Datenverarbeitungseinrichtung 50 zu übermitteln und von dieser auszuwerten.

Wird ein Objekt nicht durch die vorrausschauende Sensoreinrichtung erfasst, z.B. aufgrund eines defekten Sensors oder für den Sensor ungünstigen Bedingungen, und tritt eine Kollision ein, so wird als Relativgeschwindigkeit die Fahrzeuggeschwindigkeit angenommen, also dass das Objekt steht. Die Auswertung und Charakterisierung des Objekts hinsichtlich der Masse und/oder Härte erfolgt wie zuvor beschrieben. Diese Rückfallstrategie erhöht vorteilhafterweise die Sicherheit des Verfahrens. Vorteilhafter Weise sind die gewählten Bereiche für die Masse bzw. Härte für die Rückfallstrategie größer gewählt, als in den zuvor beschriebenen Ausführungsformen, um auch dann eine sichere Auslösung zu gewährleisten.

## Patentansprüche

1. Verfahren zur Objekterkennung mit den folgenden Schritten:
Erfassen einer Relativgeschwindigkeit (101) eines ersten Objekts (1) auf Kollisionskurs mit einem zweiten bewegten Objekt mit einer ersten Sensoreinrichtung (10) des zweiten Objekts;
Erfassen einer Krafteinwirkung des ersten Objekts (1) auf das zweite Objekt bei der Kollision mit einer zweiten Sensoreinrichtung (20) des zweiten Objekts;
Schätzen einer Masse-kennzeichnenden Größe und/oder eine Härte-kennzeichnende Größe des ersten Objekts (1) basierend auf der Krafteinwirkung und der Relativgeschwindigkeit (101) des ersten Objekts (1); und
Erkennen des ersten Objekts (1) als bestimmten Objekttyp, wenn die geschätzte Masse-kennzeichnende Größe und/oder Härte-kennzeichnende Größe innerhalb eines vorgegebenen Bereichs liegt.

2. Verfahren nach Anspruch 1, wobei ein Kollisionszeitpunkt des ersten Objekts mit dem bewegten zweiten Objekt mit einer ersten Sensoreinrichtung (10) des zweiten Objekts geschätzt wird, bevor die Kollision eintritt und die Erfassung der Krafteinwirkung spätestens ab dem geschätzten Kollisionszeitpunkt erfolgt.

3. Verfahren nach mindestens einem der vorhergehenden Ansprüche 1 oder 2, wobei in einem ersten Schritt eine Trajektorie des ersten Objekts (1) mit der ersten Sensoreinrichtung (10) bestimmt wird und basierend auf der Trajektorie geschätzt wird, ob eine Kollision des zweiten mit dem ersten Objekt (1) eintritt.

4. Verfahren nach Anspruch 3, wobei der Kollisionszeitpunkt basierend auf der Trajektorie geschätzt wird.

5. Verfahren nach mindestens einem der vorhergehenden Ansprüche 3 oder 4, wobei ein Kontaktpunkt (108) basierend auf der Trajektorie geschätzt wird.

6. Verfahren nach mindestens einem der vorhergehenden Ansprüche 2 bis 5, wobei bei der Kollision eine Abweichung des geschätzten Kollisionszeitpunktes zu einem tatsächlichen Kollisionszeitpunkt und/oder eine Abweichung des geschätzten Kontaktpunktes zu einem tatsächlichen Kontaktpunkt erfasst wird und basierend auf mindestens einer der Abweichungen die erfasste Relativgeschwindigkeit korrigiert wird.

7. Verfahren nach mindestens einem der vorhergehenden Ansprüche, wobei in einem Schritt eine Gestalt des ersten Objekts (1) mittels der ersten Sensoreinrichtung (10) oder einer dritten Sensoreinrichtung (30) vor der Kollision erfasst wird, und in einem weiteren Schritt eine Übereinstimmung der erfassten Gestalt mit einer vorgegebenen Gestalt des ersten Objekttyps geschätzt wird und bei Übereinstimmung das erste Objekt als bestimmter Objekttyp erkannt wird.

8. Verfahren nach mindestens einem der vorhergehenden Ansprüche, wobei in einem Schritt eine Geschwindigkeit des ersten Objekts bestimmt wird und nur wenn die Geschwindigkeit des ersten Objekts innerhalb eines vorgebenen Bereichs liegt, das erste Objekt als bestimmter Objekttyp erkannt wird.

9. Verfahren nach mindestens einem der vorhergehenden Ansprüche 7 oder 8, wobei bei einem Widerspruch der Erkennung des ersten Objekts als bestimmter Objekttyp zweier verschiedener Schritte das erste Objekt als bestimmter Objekttyp erkannt wird.

10. Verfahren nach mindestens einem der vorhergehenden Ansprüche, wobei bei einem Widerspruch der Erkennung des Objekts als ersten Objekttyps basierend auf der Masse-behafteten und der Härte-behafteten Größe, das Objekt nicht als bestimmter Objekttyp erkannt wird.

11. Verfahren nach mindestens einem der vorhergehenden Ansprüche 1 oder 2, wobei in einem ersten Schritt eine Trajektorie des ersten Objekts (1) mit der ersten Sensoreinrichtung (10) bestimmt wird und basierend auf der Trajektorie geschätzt wird, mit welcher Wahrscheinlichkeit eine Kollision des zweiten mit dem ersten Objekt (1) eintreten wird.

12. Vorrichtung zur Ausführung des Verfahrens nach Anspruch 1, welche an einem zweiten Objekt angeordnet ist, mit:
einer ersten Sensoreinrichtung (10) des zweiten Objekts mit mindestens einem berührungslosen Sensor (12, 12a, 12b) zum Erfassen der Relativgeschwindigkeit (101) des ersten Objekts (1);
einer zweiten Sensoreinrichtung (20) mit mindestens einem Sensor (22, 22a, 22b, 22c) zum Erfassen und Umwandeln der Krafteinwirkung des ersten Objekts (1) auf das zweite Objekt in ein oder mehrere Signale (223); und
einer oder mehreren Datenverarbeitungsvorrichtungen (23, 40, 50), welche mit der ersten (10) und den zweiten Sensoreinrichtungen (20) zum Übermitteln der Relativgeschwindigkeit (101) und der Signale (223) verbunden ist, und welche zum Schätzen der Masse-kennzeichnenden Größe und/oder der Härte-kennzeichnenden Größe des ersten Objekts (1) und zum Erkennen des ersten Objekts eingerichtet ist.

13. Vorrichtung nach Anspruch 12, **dadurch gekennzeichnet, dass** die krafterfassenden Sensoren (12, 12a, 12b) Beschleunigungssensoren aufweisen.

14. Vorrichtung nach einem der Ansprüche 12 oder 13, **dadurch gekennzeichnet, dass** die Datenverarbeitungseinrichtungen (23, 40, 50) in einer Vorrichtung integriert sind.
